# DEMANDE DE BREVET EUROPEEN

(11) **EP 1 174 799 A1**
(43) Date de publication de la demande: **23.01.2002**
(21) Numéro de dépôt: 01401957.4
(22) Date de dépôt: 20.07.2001
(51) Int. Cl.: G06F 13/42, H04L 12/403

(54) **Composants programmables et systèmes pour des communications en full-duplex entre un maître et plusieurs esclaves**

(30) Priorité: 21.07.2000 FR 0009595
(71) Demandeur: Alliance pour les Technologies de l'Informatique, ALITEC, 53001 Laval Cedex (FR)
(72) Inventeur: Le Guen, Hélène, 53000 Laval (FR); Sergent, Mickael, 53470 Commer (FR); Costaouec, Laurent, 53260 Perne/Roc (FR)
(74) Mandataire: Dawidowicz, Armand

(57) **Abrégé**

Dans un sytème de communication selon l'invention entre un maître 1 et plusieurs esclaves 2₁ à 2_{N}, un composant programmable de bus 21 de l'invention est associé respectivement à chaque esclave 2. Des moyens 210, 211 et 212 et des signaux spécifiques SEL et SYNC sont prévus pour gérer une phase de sélection et une phase de communication afin d'établir des communications full-duplex en mode point-à-point sur un bus 3 entre le maître et les esclaves. La phase de sélection est initialisée par le maître afin de sélectionner un esclave produisant un type de message demandé. Pendant la phase de communication, le maître est en liaison directe avec l'esclave sélectionné, les esclaves non sélectionnés étant physiquement déconnectés du bus. L'invention autorise la réalisation de systèmes de communication rapides et économiques tel qu'un bus SPI avec plusieurs esclaves et ce, sans système d'adressage fixe.

## Description

La présente invention concerne de manière générale la communication rapide de données à bas coût entre un dispositif maître et plusieurs dispositifs esclaves.

Plus particulièrement, la présente invention concerne des composants programmables de bus et leur intégration dans des systèmes de communication rapides faisant appel à un bus de communication de type « full-duplex » (duplex total) autorisant des communications bidirectionnelles simultanées dans un mode point-à-point.

Dans la technique antérieure, il est connu une interface rapide SPI (Serial Peripheral Interface) à bas coût, fonctionnant en full-duplex. L'interface SPI est de type série et comprend seulement trois lignes: une ligne d'horloge, une ligne pour transmettre et une ligne pour recevoir. Il s'agit donc d'une solution très économique et qui en outre est bien adaptée pour la communication entre un ordinateur et un périphérique. L'interface SPI présente toutefois l'inconvénient majeur de ne pouvoir fonctionner qu'avec un seul esclave.

Des bus de communication pour connecter un maître et plusieurs esclaves sont connus dans la technique antérieure, mais ces bus sont de mise en oeuvre complexe et leur coût est élevé lorsque des liaisons rapides à haut débit sont recherchées.

On connaît encore par le document US-A-5.742.186 un réseau de communication entre un maître et plusieurs esclaves à travers un bus série asynchrone à trois fils. Ce réseau de communication utilise des composants extérieurs (21, 22 et 23) pour raccorder au bus un maître (10) et des esclaves (1, 2, 3). Ce document présente une solution économique pour bâtir un réseau à partir d'une liaison série simple et qui n'est pas particulièrement destinée à cela. Le composant de ce document est construit à partir de circuit OU de telle manière à fournir un raccordement identique pour tous les dispositifs raccordés, à savoir le maître et les esclaves. Cette caractéristique permet de réaliser le principal objectif visé dans ce document qui est de permettre, à tous les dispositifs raccordés, de prendre aléatoirement la place du maître afin de pouvoir établir une communication entre esclaves. Préalablement à une communication, le maître doit dialoguer avec les esclaves et cela demande une durée importante. Dans ce document, il n'est mentionné aucune programmation ou mémorisation d'une donnée d'identification d'un composant de raccordement (21), ni aucun moyen intégré dans celui-ci pour sélectionner l'esclave correspondant sur la base de la donnée d'identification. Le composant de raccordement (21) comporte trois ports d'entrée/sortie (RX01, TX10; RX21, TX12; RX1, TX1) et a seulement pour fonction de diffuser les données reçues sur un port vers les deux autres ports.

Cette technique d'interrogation successive ou de dialogue successif présente donc encore des inconvénients pour la sélection d'un esclave.

La présente invention a pour but d'apporter une solution aux inconvénients indiqués ci-dessus en fournissant des composants programmables de bus pouvant être associés à des dispositifs esclaves de façon à réaliser des systèmes de communication rapides et économiques autorisant des communications bidirectionnelles simultanées dans un mode point-à-point sur un bus de communication entre un dispositif maître et plusieurs dispositifs esclaves.

Un autre but de la présente invention est de proposer un composant programmable de bus dont la conception permet la sélection d'un esclave en fonction du type de message demandé par le maître (le maître a besoin du service auquel correspond le type de message requis).

Un composant programmable de bus selon l'invention, associé respectivement à chaque dispositif esclave dans un système de communication entre un dispositif maître et une pluralité de dispositifs esclaves, pour gérer des communications bidirectionnelles simultanées en mode point-à-point entre ledit dispositif maître et lesdits dispositifs esclaves à travers un bus de communication, lesdits dispositifs esclaves produisant des messages de différents types à l'intention dudit dispositif maître, est caractérisé en ce qu'il comprend
des premiers moyens de détection pour détecter une phase de sélection initialisée par ledit dispositif maître afin de sélectionner un dispositif esclave produisant un type de message demandé;
des premiers moyens de commutation activés pendant ladite phase de sélection pour connecter le composant programmable audit bus de communication dans un premier état prédéterminé autorisant une diffusion sur ledit bus de communication d'une donnée identifiant ledit type de message demandé, vers chacun des composants programmables associés respectivement auxdits dispositifs esclaves;
des moyens de sélection activés pendant ladite phase de sélection pour sélectionner ledit dispositif esclave associé au composant programmable pour fournir des messages dudit type de message demandé lorsque ladite donnée d'identification de type de message demandé diffusée coïncide avec une donnée programmée dans le composant programmable et identifiant un type de message que peut fournir ledit dispositif esclave associé au composant programmable, et pour ne pas sélectionner ledit dispositif esclave associé au composant programmable pour fournir des messages lorsque ladite donnée d'identification de type de message demandé diffusée ne coïncide pas avec ladite donnée programmée d'identification de type de message fourni;
des moyens d'information de sélection activés pendant ladite phase de sélection pour informer ledit dispositif maître de la sélection dudit dispositif esclave associé lorsque celle-ci est effective;
des seconds moyens de détection pour détecter une phase de communication initialisée par ledit dispositif maître avec un dispositif esclave sélectionné pendant ladite phase de sélection; et
des seconds moyens de commutation activés pendant ladite phase de communication pour connecter le composant programmable audit bus de communication dans un second état prédéterminé autorisant une communication bidirectionnelle simultanée en mode point-à-point entre ledit dispositif maître et ledit dispositif esclave associé lorsque ledit dispositif esclave associé est ledit dispositif esclave sélectionné pendant ladite phase de sélection, et pour déconnecter le composant programmable dudit bus de communication dans un troisième état prédéterminé autorisant une continuité physique dudit bus de communication lorsque ledit dispositif esclave associé n'est pas ledit dispositif esclave sélectionné pendant ladite phase de sélection.

La conception du composant programmable de bus précitée dans lequel l'esclave arrive à fournir le type de message requis se fait connaître sur le bus une communication en mode point-à-point est établie entre le maître et l'esclave sélectionné alors que pendant la communication, les esclaves non sélectionnés sont tous déconnectés physiquement du bus par les composants programmables associés permet une sélection rapide et nouvelle d'un esclave. L'utilisation de la technique d'interrgation successive ou de dialogue successif.

Différentes caractéristiques préférées des composants programmables de bus selon la présente invention sont décrites ci-après.

Un autre objectif de l'invention est de fournir des systèmes de communication dans lesquels sont intégrés des composants programmables de bus selon la présente invention de façon à obtenir les avantages de rapidité et de bas coût.

Un système de communication selon la présente invention entre un dispositif maître et une pluralité de dispositifs esclaves est caractérisé en ce qu'il comprend une pluralité de composants programmables de bus selon l'invention, associés respectivement auxdits dispositifs esclaves, pour gérer des communications bidirectionnelles simultanées en mode point-à-point entre ledit dispositif maître et lesdits dispositifs esclaves à travers un bus de communication.

Outre l'avantage d'une réalisation économique, les composants programmables de bus et les systèmes de communication selon l'invention présentent plusieurs autres avantages.

Le dispositif maître et les dispositifs esclaves peuvent être complètement indépendants au niveau du matériel. L'invention permet d'obtenir des systèmes de communication performants du fait que le temps de sélection de l'esclave est négligeable (de l'ordre de la microseconde) et du fait que le maître et l'esclave sont reliés directement pendant la durée de la communication. L'on notera également que le temps de communication n'est pas dépendant de la position de l'esclave sur le bus de communication. De plus, un grand nombre d'esclaves sur le bus ne perturbe pas le système, mis à part le fait d'une surcharge électrique si le nombre des esclaves est trop élevé.

Par ailleurs, les composants programmables de bus selon l'invention sont adaptables pour tous types d'applications mettant en oeuvre plusieurs esclaves. La gestion des esclaves se fait de manière totalement transparente, du point de vue des esclaves. Il n'est pas nécessaire d'avoir une adresse d'esclave. L'invention permet la gestion de plusieurs esclaves sans attribution figée préalable de numéros.

En outre, le maître n'a pas besoin de connaître son interlocuteur avant l'échange. Chaque esclave a la possibilité de répondre s'il le souhaite à certains types de connexions. Cela donne un grand nombre de possibilités au niveau du protocole que l'on souhaite implanter. En effet, il n'est pas nécessaire d'avoir une adresse par esclave, celle-ci peut être gérée par le maître et la gestion des erreurs, et d'autres services, peut se faire simplement sans aucun risque de perturber le système. De plus, l'invention permet de compenser le fait de n'avoir qu'un seul maître, car chaque esclave a la possibilité de s'exprimer dans des plages définies, sans qu'il ait été interrogé de façon directe par le maître.

D'autres caractéristiques et avantages de l'invention apparaîtront à la lecture de la description suivante de plusieurs réalisations préférées des composants programmables de bus et systèmes de communication selon l'invention en référence aux dessins annexés correspondants, dans lesquels:
la Fig.1 montre une forme de réalisation préférée d'un système de communication comprenant une pluralité de composants programmables de bus selon la présente invention;
les Figs.2a, 2b et 2c montrent des conventions de représentation utilisées dans la description suivante pour expliquer le fonctionnement de moyens de commutation inclus dans un composant programmable de bus selon la présente invention;
la Fig.3 montre un chronogramme de fonctionnement d'un composant programmable de bus selon la présente invention;
la Fig.4 montre un système de communication selon l'invention lors d'une phase de sélection; et
la Fig.5 montre un système de communication selon l'invention lors d'une phase de communication.

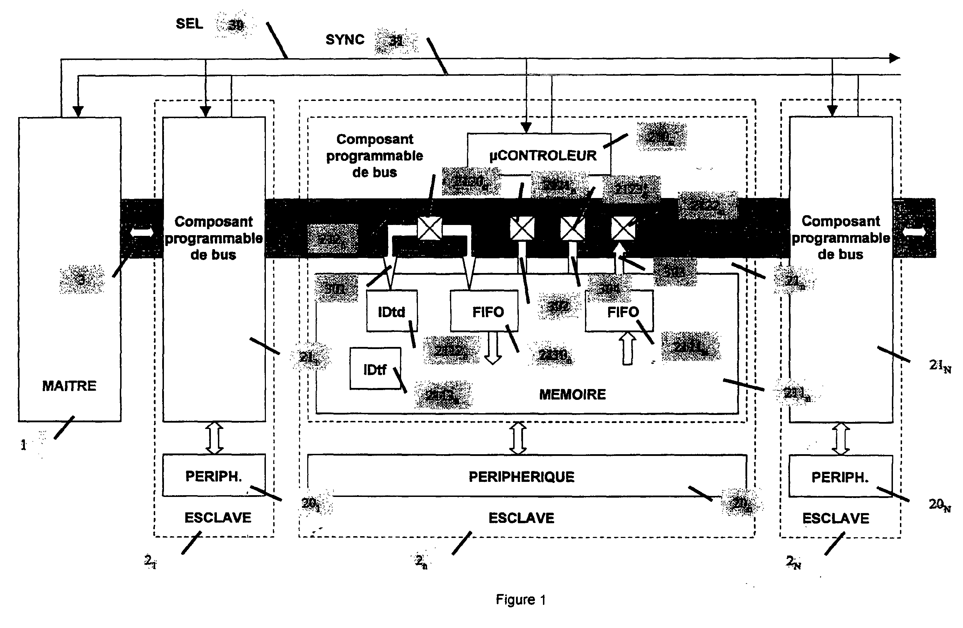

En référence à la Fig.1, il est montré une forme de réalisation préférée d'un système de communication entre un dispositif maître 1 et N dispositifs esclaves 2₁, ..., 2ₙ, ..., 2_{N} échangeant des messages à travers un bus de communication 3.

Le dispositif maître 1 est constitué, par exemple, d'un micro-ordinateur. Les dispositifs esclaves 2₁, ..., 2ₙ, ..., 2_{N} comprennent, par exemple, des périphériques informatiques 20₁, ..., 20ₙ, ..., 20_{N} et des composants programmables de bus 21₁, ..., 21ₙ, ..., 21_{N} selon la présente invention. Les N composants programmables de bus 21₁ à 21_{N} sont tous identiques et sont associés respectivement aux N périphériques informatiques 20₁ à 20_{N}. Des lignes annexes de sélection 30 et de synchronisation 31 sont ajoutées au bus de communication 3. Dans cette forme de réalisation, le bus de communication 3 est d'un type full-duplex autorisant des communications bidirectionnelles simultanées dans un mode point-à-point.

Les composants programmables de bus 21 assurent des fonctions de gestion de bus au niveau physique, et libèrent ainsi le système de communication de certaines contraintes d'adressage, comme cela apparaîtra plus clairement par la suite. Un composant programmable de bus 21 selon l'invention est réalisé de préférence sous la forme d'un circuit intégré qui peut être implanté physiquement à l'intérieur ou à l'extérieur d'un périphérique informatique, dans des cartes coupleurs, des modules de raccordement, ou autres.

En référence toujours à la Fig.1, une forme de réalisation préférée d'un composant 21ₙ quelconque parmi les composants programmables de bus 21₁ à 21_{N} est maintenant décrite en détail.

Le composant programmable de bus 21ₙ est représenté de manière simplifiée et comprend principalement un microcontrôleur (µcontrôleur) 210ₙ, une mémoire 211ₙ, et des moyens de commutation 212ₙ.

Le microcontrôleur 210ₙ est de manière classique construit autour d'un microprocesseur et est connecté aux lignes annexes 30 et 31. Des bus internes de données et d'adresses, ainsi que des moyens d'horloge, d'adressage, de sélection, et autres, connectés au microcontrôleur 210ₙ et à différents éléments fonctionnels, peuvent également être inclus dans le composant programmable de bus 21ₙ, mais ne sont pas représentés car bien connus des hommes du métier.

La mémoire 211ₙ comprend notamment un registre d'entrée 2110ₙ et un registre de sortie 2111ₙ, tous deux de type FIFO (premier entré - premier sorti), ainsi que des registres de données d'identification 2112ₙ et 2113ₙ. Les registres FIFO permettent d'obtenir une indépendance par rapport aux processeurs inclus dans les différents sous-ensembles du système. La mémoire permet de stocker des informations en transit sur le bus, mais aussi toutes les données permettant de fonctionner de façon autonome. Cela autorise une amélioration des performances du composant programmable de bus en limitant le nombre des accès externes.

Les moyens de commutation 212ₙ, appelés également ci-dessous commutateurs, sont représentés à la Fig.1 au nombre de 4, à titre d'exemple, et comprennent des commutateurs d'entrée 2120ₙ et 2121ₙ et des commutateurs de sortie 2122ₙ et 2123ₙ. Les commutateurs 212ₙ permettent notamment d'aiguiller les données vers la mémoire 211ₙ du composant programmable de bus 21ₙ ou vers le composant programmable de bus suivant 21ₙ₊₁. Les commutations des commutateurs 212ₙ sont pilotées par le microcontrôleur 210ₙ en fonction de l'état du composant programmable de bus 21ₙ et des valeurs de certains éléments dans la mémoire 211ₙ de celui-ci. Le commutateur 2120ₙ est relié à une ligne de transmission de bus (non représentée) convoyant des mots de données émis sur le bus de communication 3 du dispositif maître 1 vers les dispositifs esclaves 2₁ à 2_{N}, et est aussi relié, schématiquement, à travers une ligne 301, à une entrée du registre FIFO d'entrée 2110ₙ et à une entrée du registre de donnée d'identification 2112ₙ. Le commutateur 2121ₙ est relié à une autre ligne de bus (non représentée) associée à la ligne de transmission de bus mentionnée ci-dessus, et est aussi relié à la mémoire 211ₙ à travers une ligne 302 pour la transmission par exemple d'un signal d'horloge ou d'un signal de gestion de bus. Le commutateur 2122ₙ est relié à une ligne de réception de bus (non représentée) convoyant des mots de données émis sur le bus de communication 3 des dispositifs esclaves 2₁ à 2_{N} vers le dispositif maître 1, et est aussi relié à travers une ligne 303 à une sortie du registre FIFO de sortie 2111ₙ. Le commutateur 2123ₙ est relié à une autre ligne de bus (non représentée) associée à la ligne de réception de bus mentionnée ci-dessus, et est aussi relié à la mémoire 211ₙ à travers une ligne 304 pour la transmission par exemple d'un signal d'horloge ou d'un signal de gestion de bus.

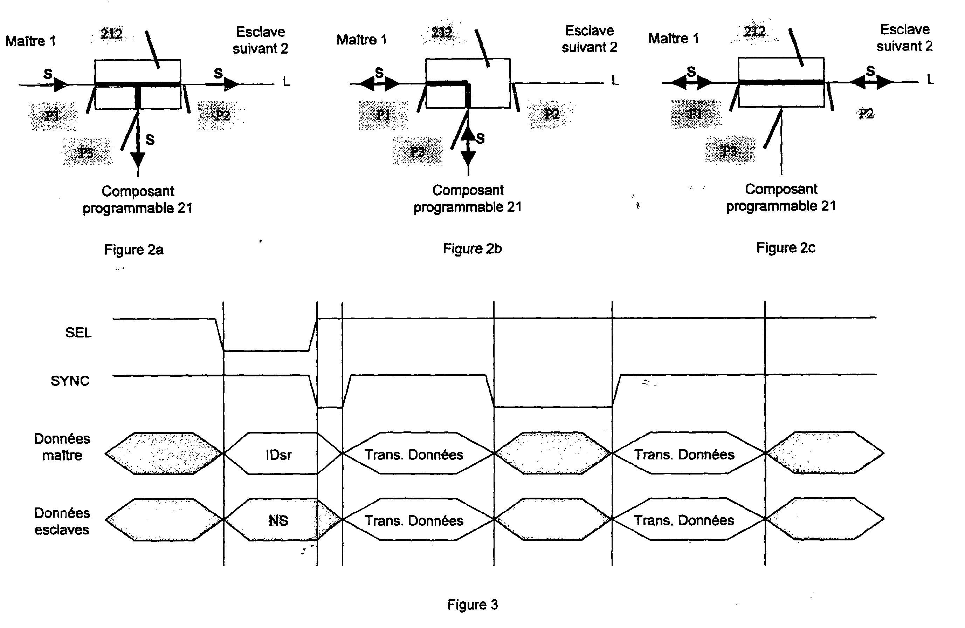

En référence aux Figs.2a à 2c, il est maintenant décrit des conventions de représentation relatives à des états de fonctionnement des commutateurs 212. Ces conventions sont utilisées dans la suite pour décrire le principe de fonctionnement du système de communication.

Comme montré aux Figs.2a à 2c, un commutateur 212 comprend trois ports d'entrée/sortie P1, P2 et P3. Par convention, le port P1 est celui raccordé du côté dispositif maître 1, le port P2 est celui raccordé du côté dispositif esclave 2 suivant, et le port P3 est celui raccordé au composant programmable 21.

En référence à la Fig.2a, un commutateur 212 est montré dans un état espionnage. Le commutateur est intercalé en série sur une ligne L du bus de communication 3 et raccorde des première et seconde extrémités de celle-ci aux ports P1 et P2 respectivement. Dans cet état, les ports P1, P2 et P3 sont en communication. Un signal S émis par le dispositif maître 1 sur la ligne L est transmis entre les ports P1 et P2 pour être acheminé sur le bus de communication 3, et le signal S apparaît également en sortie sur le port P3 pour une lecture par le composant programmable de bus 21.

En référence à la Fig.2b, le commutateur 212 est montré dans un état propriétaire. Dans cet état, les ports P1 et P3 sont en communication et le port P2 est physiquement déconnecté. Un signal S émis par le dispositif maître 1 sur la ligne L est transmis seulement vers le port P3 pour une lecture par le composant programmable de bus 21 à l'intention par exemple du périphérique associé. Ou bien, un signal S émis en entrée sur le port P3 par le composant programmable de bus 21, et en provenance par exemple du périphérique associé, est transmis seulement vers le port P1 pour être acheminé sur la ligne L du bus de communication 3 vers le dispositif maître 1.

En référence à la Fig.2c, le commutateur 212 est montré dans un état passant. Dans cet état, les ports P1 et P2 sont en communication et le port P3 est physiquement déconnecté. Un signal S émis par le dispositif maître 1 sur la ligne L est transmis seulement vers le port P2 en direction du dispositif esclave 2 suivant. Ou bien, un signal S arrivant en entrée sur le port P2, et en provenance d'un dispositif esclave 2 placé en aval sur le bus de communication 3, est transmis seulement vers le port P1 pour être acheminé sur la ligne L du bus de communication 3 vers le dispositif maître 1.

En référence aux Figs.3, 4 et 5, il est maintenant décrit le principe d'une communication bidirectionnelle simultanée en mode point-à-point entre le dispositif maître 1 et l'un quelconque 2ₙ des N dispositifs esclaves 2₁ à 2_{N} connectés sur le bus de communication 3, cette communication étant possible grâce aux composants programmables de bus 21 selon la présente invention.

Comme montré à la Fig.3, une communication sur le bus de communication 3 comprend deux phases principales: une phase de sélection et une phase de communication.

La phase de sélection permet au dispositif maître 1 de sélectionner le dispositif esclave 2 qui communiquera avec lui, sur la base d'un type de messages à échanger ou d'un service que doit pouvoir fournir le dispositif esclave 2. Le dispositif maître 1 peut ignorer a priori quel dispositif esclave 2 est susceptible de produire le type de message demandé.

Les phases de sélection et de communication sont gérées à l'aide des deux signaux SEL et SYNC transmis respectivement sur les lignes annexes 30 et 31 associées au bus de communication 3. Le signal SEL est un signal de sélection dont l'état est commandé par le dispositif maître 1 et qui est délivré par celui-ci à l'intention des composants programmables de bus 21₁ à 21_{N}. Le signal SEL est par défaut au niveau haut, qui est l'état de repos. L'état actif du signal SEL est le niveau bas. Le signal SYNC est un signal de synchronisation dont l'état est commandé par les composants programmables de bus 21₁ à 21N et qui est délivré par ceux-ci à l'intention notamment du dispositif maître 1. Le signal SYNC est utilisé par un composant programmable de bus 21ₙ notamment en phase de sélection pour indiquer au dispositif maître 1 que le dispositif esclave 2ₙ correspondant peut fournir le type de message demandé ou le service requis. Le signal SYNC est par défaut au niveau haut.

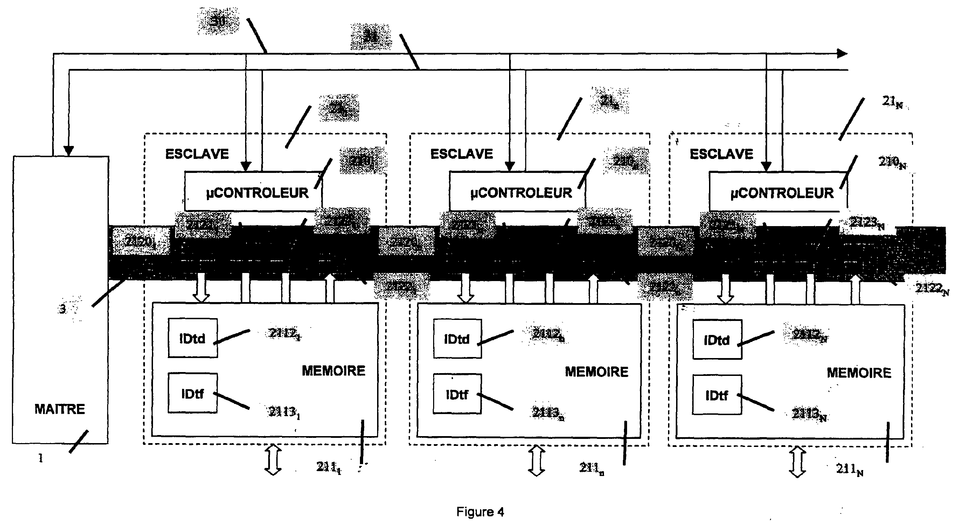

Lorsque, par exemple, le dispositif maître 1 souhaite obtenir un certain type de message, il commande la commutation du signal SEL à l'état bas et démarre ainsi une phase de sélection, comme montré à la Fig.3. Lorsque les microcontrôleurs 210₁ à 210_{N} détectent la phase de sélection par la commutation du signal SEL à l'état bas, ils commandent les moyens de commutation 212 de telle manière à les faire commuter à un état de phase de sélection EPS montré à la Fig.4. Comme montré à la Fig.4, les commutateurs d'entrée 2120 et 2121 sont alors tous à l'état espionnage de façon que les composants programmables de bus 21₁ à 21_{N} reçoivent tous les mêmes informations, et les commutateurs de sortie 2122 et 2123 sont tous à l'état passant. Comme montré à la Fig.3, pendant la phase de sélection, le dispositif maître 1 place une donnée d'identification de type de message demandé IDtd sur le bus de communication 3. Cette donnée IDtd identifie le type de message demandé par le dispositif maître 1. Pendant cette phase de sélection, comme cela apparaîtra clairement compte-tenu de l'état EPS des moyens de commutation 212 à la Fig.4, des données NS montrées à la Fig.3, provenant du dispositif esclave de tête 2₁, sont reçues par le dispositif maître 1. Ces données NS ne sont pas significatives et ne sont donc pas interprétées par le dispositif maître 1. La donnée d'identification de type de message demandé IDtd est lue par l'ensemble des dispositifs esclaves 2 et est placée dans les registres de données d'identification 2112 des mémoires 211.

Comme montré aux Figs.1 et 4, les registres de données d'identification 2113 contiennent des données d'identification de types de messages fournis IDtf. Ainsi, le registre de donnée d'identification 2113ₙ du dispositif esclave 2ₙ contient la donnée d'identification IDtfₙ du type de message fourni par le dispositif esclave 2ₙ. Cette donnée IDtfₙ est programmable et peut être modifiée par le périphérique de l'esclave.

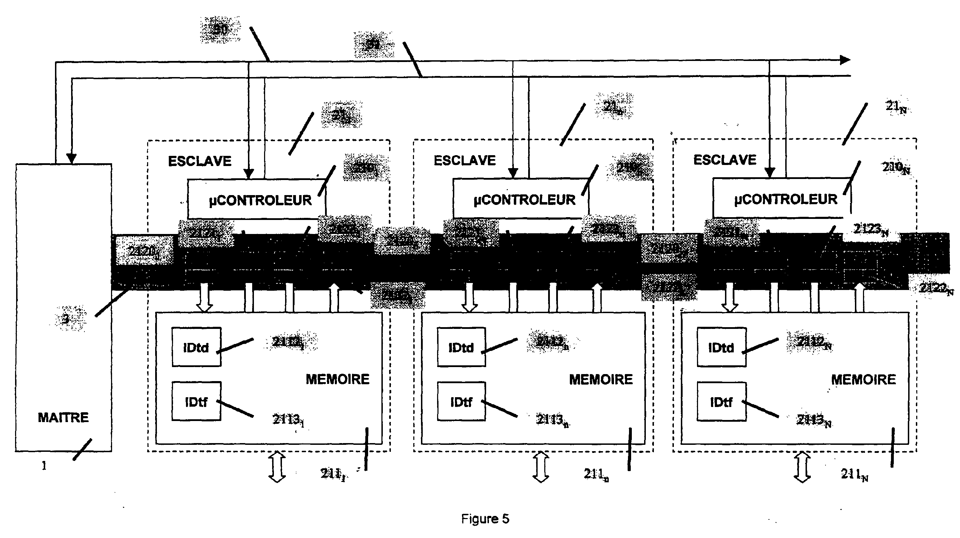

La donnée d'identification de type de message demandé IDtd est comparée dans tous les composants programmables de bus 21 aux données d'identification de types de messages fournis IDtfₙ sous la commande des microcontrôleurs 210. Lorsque la donnée IDtd et la donnée IDtfₙ sont identiques, cela signifie que le dispositif esclave 2ₙ est capable de fournir le type de message demandé par le dispositif maître 1. En supposant que le dispositif esclave 2ₙ est alors effectivement capable de fournir les messages demandés, le microcontrôleur 210ₙ signale cela au dispositif maître 1 en commandant la commutation du signal SYNC au niveau bas, comme montré à la Fig.3. Dans le cas contraire, si le dispositif esclave 2ₙ est incapable de fournir le type de message demandé, le microcontrôleur 210ₙ n'exerce aucune action sur le signal SYNC. Lorsque le dispositif maître 1 détecte la sélection d'au moins un dispositif esclave 2ₙ, il commande la montée à l'état haut du signal SEL. Dans le cas où il n'intervient aucune sélection d'un dispositif esclave 2 à l'expiration d'un certain délai, le signal SEL est ramené par défaut à l'état haut. Une fois que la logique du composant programmable 21ₙ et du dispositif esclave 2ₙ sélectionné a préparé la mémoire 211ₙ en fonction du service ou du type de message demandé, le microcontrôleur 210ₙ du dispositif esclave 2ₙ sélectionné ramène le signal SYNC à l'état haut et indique ainsi au dispositif maître 1 que la phase de communication peut démarrer. Parallèlement, le microcontrôleur 210ₙ du dispositif esclave 2ₙ sélectionné commande ses moyens de commutation 212ₙ de telle manière à les faire commuter à un état propriétaire de phase de communication EPC1, montré à la Fig.5, dans lequel les quatre commutateurs 2120ₙ à 2123ₙ sont tous à l'état propriétaire, et les microcontrôleurs 210 des dispositifs esclaves 2 non sélectionnés commandent leurs moyens de communication 212 de telle manière à les faire commuter à un état passant de phase de communication EPC2, montré à la Fig.5, dans lequel les quatre commutateurs 2120 à 2123 sont tous à l'état passant. Avec cette configuration, seul le dispositif esclave 2ₙ sélectionné peut communiquer avec le dispositif maître 1. Les moyens de commutation 212 à l'état passant des dispositifs esclaves 2 non sélectionnés ne pourront sortir de cet état pour venir à l'état espionnage que lorsque le dispositif maître 1 lancera une nouvelle sélection en activant le signal SEL.

Dans la phase de communication, une communication bidirectionnelle simultanée en mode point-à-point est établie entre le dispositif maître 1 et le dispositif esclave 2ₙ sélectionné. Le composant programmable de bus 21ₙ mémorise les données en entrée et transmet ses données en sortie conformément au protocole supporté par le bus de communication 3, et il dispose du signal SYNC pour demander au dispositif maître 1 un arrêt du transfert de données en commandant une commutation à l'état bas du signal SYNC. Un tel arrêt peut intervenir lorsque par exemple le dispositif esclave 2ₙ n'a plus de données à transmettre, ou lorsqu'il n'a plus de place en mémoire pour recevoir les données émises par le dispositif maître 1. La transmission peut reprendre ensuite lorsque le dispositif esclave 2ₙ a signalé sa nouvelle disponibilité par un passage à l'état haut du signal SYNC, comme montré à la Fig.3. Ou bien, le cas échéant, le dispositif maître 1 peut prendre la décision de revenir en phase de sélection pour initier un nouveau dialogue avec un autre dispositif esclave 2.

L'algorithme ci-dessous résume de manière synthétique le fonctionnement du composant programmable de bus selon la présente invention.

### SI Signal de sélection = bas ALORS

- Signal de synchronisation = haut
- Composant ≠ producteur du type de message demandé
- Positionner les commutateurs d'entrée à l'état espionnage
- Positionner les commutateurs de sortie à l'état propriétaire

SI données envoyées par le dispositif maître = IDtf en mémoire ALORS
- Signal de synchronisation = bas
- Composant = producteur du type de message demandé

ATTENTE DE Signal de sélection = haut

SI Composant = producteur du type de message demandé ALORS
- Positionner les commutateurs à l'état propriétaire
- Intervention de la logique de l'esclave pour préparer la mémoire du composant en fonction du service ou type de message demandé
- Signal de synchronisation = haut SINON
- Positionner les commutateurs à l'état passant

Le composant programmable de bus est particulièrement bien adapté pour un bus de communication série de type SPI (Serial Peripheral Interface). Le bus SPI est un bus rapide synchrone permettant d'échanger des données en full-duplex avec un débit de l'ordre du Mbps. Le bus SPI est composé de 3 lignes: une ligne d'horloge (SPCLK), une ligne pour transmettre (SPTXD) et une ligne pour recevoir (SPRXD), et est prévu pour fonctionner en mode point-à-point entre un maître et un seul esclave. Par l'ajout de composants programmables de bus selon l'invention et des lignes annexes 30 et 31 décrites plus haut, il est possible d'utiliser le bus rapide SPI entre un maître et plusieurs esclaves et d'obtenir ainsi un bus rapide à bas coût autorisant un fonctionnement avec plusieurs esclaves.

## Revendications

1. Composant programmable de bus, associé respectivement à chaque dispositif esclave (2) dans un système de communication entre un dispositif maître (1) et une pluralité de dispositifs esclaves (2₁ à 2_{N}), pour gérer des communications bidirectionnelles simultanées en mode point-à-point entre ledit dispositif maître (1) et lesdits dispositifs esclaves (2₁ à 2_{N}) à travers un bus de communication (3), lesdits dispositifs esclaves (2₁ à 2_{N}) produisant des messages de différents types à l'intention dudit dispositif maître (1), **caractérisé en ce qu'**il comprend
des premiers moyens de détection (SEL, 30, 210) pour détecter une phase de sélection initialisée par ledit dispositif maître (1) afin de sélectionner un dispositif esclave (2) produisant un type de message demandé;
des premiers moyens de commutation (212) activés pendant ladite phase de sélection pour connecter le composant programmable (21) audit bus de communication (3) dans un premier état prédéterminé (EPS) autorisant une diffusion sur ledit bus de communication (3) d'une donnée (IDtd) identifiant ledit type de message demandé, vers chacun des composants programmables (21₁ à 21_{N}) associés respectivement auxdits dispositifs esclaves (2₁ à 2_{N});
des moyens de sélection (210, 2112, 2113, IDtd, IDtf) activés pendant ladite phase de sélection pour sélectionner ledit dispositif esclave (2) associé au composant programmable (21) pour fournir des messages dudit type de message demandé lorsque ladite donnée d'identification de type de message demandé diffusée (IDtd) coïncide avec une donnée (IDtf) programmée dans le composant programmable (21) et identifiant un type de message que peut fournir ledit dispositif esclave (2) associé au composant programmable (21), et pour ne pas sélectionner ledit dispositif esclave (2) associé au composant programmable (21) pour fournir des messages lorsque ladite donnée d'identification de type de message demandé diffusée (IDtd) ne coïncide pas avec ladite donnée programmée d'identification de type de message fourni (IDtf);
des moyens d'information de sélection (SYNC) activés pendant ladite phase de sélection pour informer ledit dispositif maître (1) de la sélection dudit dispositif esclave associé (2) lorsque celle-ci est effective;
des seconds moyens de détection (SEL, SYNC, 30, 31, 210) pour détecter une phase de communication initialisée par ledit dispositif maître (1) avec un dispositif esclave sélectionné pendant ladite phase de sélection; et
des seconds moyens de commutation (212) activés pendant ladite phase de communication pour connecter le composant programmable (21) audit bus de communication (3) dans un second état prédéterminé (EPC1) autorisant une communication bidirectionnelle simultanée en mode point-à-point entre ledit dispositif maître (1) et ledit dispositif esclave associé (2) lorsque ledit dispositif esclave associé (2) est ledit dispositif esclave sélectionné pendant ladite phase de sélection, et pour déconnecter le composant programmable (21) dudit bus de communication (3) dans un troisième état prédéterminé (EPC2) autorisant une continuité physique dudit bus de communication (3) lorsque ledit dispositif esclave associé (2) n'est pas ledit dispositif esclave sélectionné pendant ladite phase de sélection.

2. Composant programmable de bus selon la revendication 1, **caractérisé en ce que** lesdits premiers moyens de détection (SEL, 30, 210) détectent ladite phase de sélection en fonction d'un état actif (B) d'un signal de sélection (SEL) émis par ledit dispositif maître (1) sur une première ligne annexe (30) dudit bus de communication (3) reliant ledit dispositif maître (1) à chacun des composants programmables (21₁ à 21_{N}) du système de communication.

3. Composant programmable de bus selon la revendication 1 ou 2, **caractérisé en ce que** lesdits moyens d'information de sélection (SYNC) informent ledit dispositif maître (1) de la sélection dudit dispositif esclave associé (2) en commandant une commutation à un premier état prédéterminé (B) d'un signal de synchronisation (SYNC) émis vers ledit dispositif maître (1) sur une seconde ligne annexe (31) du bus de communication (3) reliant chacun des composants programmables (21₁ à 21_{N}) du système de communication audit dispositif maître (1).

4. Composant programmable de bus selon la revendication 3, **caractérisé en ce que** lesdits seconds moyens de détection (SEL, SYNC, 30, 31, 210) détectent ladite phase de communication en fonction d'un état de repos (H) dudit signal de sélection (SEL) sur ladite première ligne annexe (30) et d'une commutation à un second état prédéterminé (H) dudit signal de synchronisation (SYNC) sur ladite seconde ligne annexe (31).

5. Composant programmable de bus selon l'une quelconque des revendications 1 à 4, **caractérisé en ce que** lesdits premiers et seconds moyens de commutation (212) sont constitués avec des commutateurs (2120 à 2123) intercalés en série sur des lignes dudit bus de communication (3) et comprenant chacun trois ports d'entrée/sortie (P1, P2, P3), des premier et second ports (P1, P2) étant raccordés respectivement à une première extrémité d'une ligne de bus du côté dispositif maître (1) et à une seconde extrémité de ladite ligne de bus du côté dispositif esclave (2) suivant, et un troisième port (P3) étant relié à des moyens (211) du composant programmable (21).

6. Composant programmable de bus selon la revendication 5, **caractérisé en ce que**
pendant ladite phase de sélection, des premiers commutateurs (2120, 2121) montés sur des lignes de transmission dudit bus de communication (3) convoyant les données émises par ledit dispositif maître (1) vers lesdits
dispositifs esclaves (2₁ à 2_{N}) sont placés à un état espionnage dans lequel lesdits premier, deuxième et troisième ports (P1, P2, P3) sont en communication afin de diffuser ladite donnée d'identification de type de message demandé (IDtd) sur ledit bus de communication (3) vers chacun des composants programmables (21₁ à 21_{N}) associés respectivement auxdits dispositifs esclaves (2₁ à 2_{N}), et des seconds commutateurs (2122, 2123) montés sur des lignes de réception dudit bus de communication (3) convoyant les données émises par les dispositifs esclaves (2₁ à 2_{N}) vers le dispositif maître (1) sont placés à un état propriétaire dans lequel lesdits premier et troisième ports (P1, P3) sont en communication et ledit deuxième port (P2) est physiquement déconnecté.

7. Composant programmable de bus selon la revendication 5 ou 6, **caractérisé en ce que**
pendant ladite phase de communication, lorsque ledit dispositif esclave associé (2) est ledit dispositif esclave sélectionné pendant ladite phase de sélection, lesdits premiers et deuxièmes commutateurs (2120 à 2123) sont placés à un état propriétaire dans lequel lesdits premier et troisième ports (P1, P3) sont en communication et ledit deuxième port (P2) est physiquement déconnecté, et, lorsque ledit dispositif esclave associé (2) n'est pas ledit dispositif esclave sélectionné pendant ladite phase de sélection, lesdits premiers et deuxièmes commutateurs (2120 à 2123) sont placés à un état passant dans lequel lesdits premier et deuxième ports (P1, P2) sont en communication et ledit troisième port (P3) est physiquement déconnecté.

8. Composant programmable de bus selon l'une quelconque des revendications 1 à 7, **caractérisé en ce que** lesdits moyens de sélection comprennent des premier et second registres (2112, 2113) pour mémoriser respectivement ladite donnée d'identification de type de message demandé diffusée (IDtd) et ladite donnée programmée d'identification de type de message fourni (IDtf), et des moyens de comparaison (210) pour comparer ladite donnée d'identification de type de message demandé diffusée (IDtd) et ladite donnée programmée d'identification de type de message fourni (IDtf) afin de détecter une coïncidence ou une non-coïncidence entre lesdites données (IDtd, IDtf).

9. Composant programmable de bus selon l'une quelconque des revendications 1 à 8, **caractérisé en ce qu'**il comprend un microcontrôleur (210) pour commander et 'gérer les différentes fonctions assurées par le composant programmable (21), et une mémoire (211) comprenant des registres de type FIFO (2110, 2111) pour stocker temporairement des données échangées dans les deux sens de communication entre ledit dispositif maître (1) et ledit dispositif esclave associé (2).

10. Composant programmable de bus selon l'une quelconque des revendications 1 à 9, **caractérisé en ce que** ledit dispositif maître (1) est un ordinateur et lesdits dispositifs esclaves (2₁ à 2_{N}) sont des périphériques informatiques.

11. Composant programmable de bus selon l'une quelconque des revendications 1 à 10, **caractérisé en ce que** les communications bidirectionnelles simultanées en mode point-à-point entre ledit dispositif maître (1) et lesdits dispositifs esclaves (2₁ à 2_{N}) à travers ledit bus de communication (3) sont des communications de type synchrone.

12. Composant programmable de bus selon la revendication 11, **caractérisé en ce que** les communications bidirectionnelles simultanées en mode point-à-point entre ledit dispositif maître (1) et lesdits dispositifs esclaves (2₁ à 2_{N}) à travers ledit bus de communication (3) sont des communications série de type SPI.

13. Système de communication entre un dispositif maître (1) et une pluralité de dispositifs esclaves (2₁ à 2_{N}), **caractérisé en ce qu'**il comprend une pluralité de composants programmables de bus (21₁ à 21_{N}) selon l'une quelconque des revendications 1 à 12, associés respectivement auxdits dispositifs esclaves (2₁ à 2_{N}), pour gérer des communications bidirectionnelles simultanées en mode point-à-point entre ledit dispositif maître (1) et lesdits dispositifs esclaves (2₁ à 2_{N}) à travers un bus de communication (3).
